# FASCICULE DE BREVET EUROPEEN

(11) **EP 1 022 922 B1**
(45) Date de publication et mention de la délivrance du brevet: **12.01.2005**
(21) Numéro de dépôt: 00460005.2
(22) Date de dépôt: 21.01.2000
(51) Int. Cl.: H04Q 7/38, H04L 9/32

(54) **Procédé d'authentification, avec établissement d'un canal sécurise, entre un abonné et un fournisseur de services accessible via un opérateur de télécommunications**
Authentifizierungsverfahren zwischen einem Teilnehmer und einem Dienstleister, der durch einen Netzbetreiber erreichbar ist, mittels Bereitstellung eines gesicherten Kanals
Authentication method establishing a secured channel between a subscriber and a service provider accessed through a telecommunication operator

(30) Priorité: 22.01.1999 FR 9900901
(43) Date de publication de la demande: 26.07.2000
(73) Titulaire: Société Française du Radiotéléphone-SFR, 75008 Paris (FR)
(72) Inventeur: Wary, Jean-Philippe M., 92340 Bourg-La-Reine (FR)
(74) Mandataire: Vidon, Patrice

(56) Documents cités:
- WO-A-98/51037
- WALKER M: "SECURITY IN MOBILE AND CORDLESS TELECOMMUNICATIONS" PROCEEDINGS OF THE ANNUAL EUROPEAN CONFERENCE ON COMPUTER SYSTEMS A SOFTWARE ENGINEERING (COMPEURO), THE HAGUE, MAY 4 - 8, 1992, no. CONF. 6, 4 mai 1992 (1992-05-04), pages 493-496, XP000344244 INSTITUTE OF ELECTRICAL AND ELECTRONICS ENGINEERS ISBN: 0-8186-2760-3
- MOLVA R ET AL: "AUTHENTICATION OF MOBILE USERS" IEEE NETWORK: THE MAGAZINE OF COMPUTER COMMUNICATIONS, vol. 8, no. 2, 1 mars 1994 (1994-03-01), pages 26-34, XP000515077 ISSN: 0890-8044

## Description

Le domaine de l'invention est celui de la sécurisation du transfert de données au travers d'un ou plusieurs réseaux de télécommunications.

La sécurisation s'entend ici comme étant la capacité d'assurer une authentification des parties souhaitant communiquer, puis d'établir, le cas échéant, un canal de communication sécurisé entre elles.

Il est notamment, mais non exclusivement, adapté aux applications dans lesquelles l'abonné au réseau de télécommunication se connecte par l'intermédiaire d'un téléphone mobile (ou ME pour "Mobile Equipment" en anglais), par exemple en utilisant la norme de télécommunication GSM (pour Global System for Mobile communications" en anglais), ou une norme équivalente ou concurrente telle que DCS 1800 (pour "Digital Cellular à 1800 Mhz", en anglais), PCS 1900 (pour "Personal Communication System à 1900 MHz" en anglais), DECT (pour "Digital European Cordless Telecommunications" en anglais, ou UTMS (pour "Universal Mobile Telecommunication System" en anglais).

De façon connue, ces réseaux de communication avec des mobiles sont gérés par des "opérateurs de réseau mobile", ci-après dénommés "opérateurs", qui assurent toutes les fonctions de gestion des abonnements, d'acheminement des communications, ou encore de négociation de conditions d'accès de leurs abonnés à des fournisseurs de service (ou encore "services ou serveurs de contenu") accessibles par les réseaux de communication.

Le procédé de l'invention s'applique préférentiellement au cas où l'abonné au réseau de télécommunication par terminal mobile souhaite se connecter de façon sécurisée à un correspondant, typiquement un fournisseur de service, ce dernier étant accessible sur un autre réseau de télécommunications interconnecté avec le réseau de l'abonné.

Mais en fait le procédé de sécurisation de l'invention s'applique avantageusement dans tout autre contexte dans lequel un abonné ayant souscrit à un service accessible par un réseau de télécommunication souhaite communiquer, de façon sécurisée, et sans transfert d'éléments secrets par le réseau, avec un tiers distant dans le cadre de communications de données impliquant soit un réseau unique, soit deux ou plusieurs réseaux interconnectés dont le passage de l'un à l'autre implique une rupture de protocole.

Bien que l'invention s'applique à l'origine à des communications établies entre d'une part un réseau fermé (de type GSM) auquel est rattaché l'abonné, vers un réseau ouvert (de type internet), la nature ouverte ou fermée de chacun des réseaux de transmission impliqué n'est pas une caractéristique limitative du principe général de l'invention.

Beaucoup de services de contenu sont généralement accessibles via un réseau de communication ouvert, typiquement internet, qui possède son protocole propre de communication. Lorsqu'un terminal mobile GSM souhaite accéder à un tel service, il y a donc rupture de protocole à l'interface entre le réseau GSM et le réseau d'accès au fournisseur de service de type internet. C'est d'ailleurs le rôle des opérateurs de télécommunication d'assurer et de gérer ces éléments de médiation et d'interfaçage.

Actuellement, il existe des procédés d'authentification et de confidentialité propres à chacun de ces deux réseaux. Les solutions connues consistent donc à mettre en oeuvre de façon juxtaposée les procédures disponibles sur l'un puis l'autre réseau, lors de la transmission de chaque train de données. Il en résulte généralement une rupture de confidentialité au niveau de l'interface. En particulier, la mise en oeuvre de protocoles sécurisé sur chaque segment amont et aval impose que l'opérateur soit en possession des éléments secrets, clés et/ou algorithmes cryptographiques requis par chaque procédé d'authentification et confidentialité. Cette responsabilité fait peser sur l'opérateur une contrainte de conservation de la confidentialité qui peut être indésirable pour le fournisseur de service, pour l'abonné, voire pour l'opérateur lui-même.

Une autre solution connue consiste à faire intervenir un tiers pour la gestion des secrets, habituellement nommé "tiers de confiance", mais cette solution est également lourde, et donc inappropriée à certaines situations où le coût et la complexité de gestion ne s'imposent pas.

Encore une autre solution proposée par M. Walker dans « Security in Mobile and Cordless Telecommunications » (*Computer Systems and Software Engineering, Proceedings of CompEuro - 4-8 Mai 1992, La Haye, pp 493-496, XP000344244*) utilise un mécanisme de mot de passe dynamique, dans lequel un terminal fixe délivre une demande d'accès (aléatoire) à un terminal mobile. Le terminal mobile répond à cette demande en utilisant un algorithme cryptographique, sous la commande d'une clé d'authentification. Le terminal fixe compare ensuite la réponse émise par le terminal mobile à la réponse attendue, et considère que l'authentification est réussie si les deux valeurs correspondent.

Un inconvénient majeur de cette technique de l'art antérieur est qu'elle nécessite des allers-retours entre le terminal mobile et le terminal fixe, et par conséquent une authentification plus longue.

R. Molvar et al. proposent également dans « Authentification of mobile users » *(IEEE NETWORK, vol*. *8, no*.*2, 1 mars 1994, pages 26-34, XP000515077)* une solution pour l'authentification de mobiles GSM, à partir d'une carte SIM (en anglais « Subscriber Identity Module » pour « module d'identification d'abonné ») contenue dans un mobile et comprenant une clé secrète connue du réseau de l'abonné seulement. Lors d'une communication avec un correspondant d'un réseau différent, un centre d'authentification envoie au réseau de l'abonné un triplet d'information comprenant une demande d'accès, une réponse signée et une clé correspondante.

Cependant, un inconvénient de cette technique est qu'elle est mal adaptée aux réseaux de grandes tailles gérés par plusieurs administrateurs, et peu efficace en terme de gestion de bande passante.

L'invention a pour objectif de pallier ces différents inconvénients de l'état de la technique.

Plus précisément, un premier objectif de l'invention est d'assurer une procédure d'authentification qui puisse être mise en oeuvre indépendamment des réseaux successifs qu'emprunte une communication. Une telle procédure d'authentification doit pouvoir au moins permettre au fournisseur de service d'authentifier l'abonné , et préférentiellement de façon mutuelle, lors de chaque session.

L'objectif de l'invention est également de fournir un procédé de transfert de données via un canal chiffré qui permette à un abonné et un fournisseur de service de communiquer de façon sécurisée sans intervention, voire même à l'insu, de l'opérateur du réseau de rattachement de l'abonné.

Un autre objectif de l'invention est de fournir un procédé qui permette à l'opérateur de définir le schéma de sécurisation, et de garantir la qualité de l'authentification sur la liaison dont il a le contrôle, sans qu'il ait à connaître du contenu ni des éléments de fonctionnement du canal chiffré.

C'est également un objectif de l'invention que de permettre à l'abonné et au fournisseur de service de partager la connaissance d'une clé de chiffrement des messages qu'ils échangent sur le réseau, chaque clé étant avantageusement différente pour chaque session de communication, sans que la clé de chiffrement transite à aucun moment sur le réseau.

L'invention a également pour objectif d'utiliser de façon optimisée les ressources en matière de sécurité qui sont natives d'un réseau GSM, à savoir essentiellement l'utilisation d'élément(s) secret(s) et d'algorithme(s) présents - ou le cas échéant (re)-programmables - dans les terminaux des abonnés au réseau, typiquement dans le module d'identification d'abonné, généralement dit "carte SIM" (en anglais "Subscriber Identity Module") coopérant avec le terminal radiotéléphonique de l'abonné.

Un autre objectif de l'invention est de fournir à l'abonné un mot de passe, ainsi que les moyens de calculer une clé de chiffrement/déchiffrement, qui sont attribués et gérés exclusivement par le fournisseur de services, et qui n'ont donc à être connus ni de l'opérateur, ni de tiers.

L'invention a aussi pour objectif de fournir un procédé qui assure une réelle "étanchéïté" entre les différents fournisseurs de services, du point de vue de la sécurité des communications, et des transactions éventuelles initiées par l'abonné.

Ces objectifs, ainsi que d'autres qui apparaîtront par la suite sont atteints, selon l'invention, à l'aide d'un procédé de sécurisation d'une communication entre d'une part un abonné à un réseau de télécommunication et d'autre part un fournisseur de services accessible via un opérateur dudit réseau de télécommunication auquel est rattaché l'abonné, procédé caractérisé en ce qu'il comprend d'une part un processus d'inscription initiale dudit abonné audit fournisseur de service via ledit opérateur, et d'autre part un processus de déroulement de chacune des sessions de communication entre l'abonné et le fournisseur de service.

Par abonné on entend bien entendu non seulement l'utilisateur, mais aussi et surtout son équipement de réseau. De même, le fournisseur de services s'entend comme étant principalement le serveur informatique connecté au réseau. Toutefois, comme on le verra ci-après, certains transferts d'information peuvent avoir lieu hors réseau (par exemple par courrier postal, ou télécopie, etc...), et impliquer donc d'autres entités, notamment des individus, pour leur réalisation.

Selon l'invention, le processus d'inscription initiale comprend:
- d'une part la fourniture par l'opérateur de télécommunication à destination du fournisseur de service, d'un identifiant (Device ID) de l'abonné dans son réseau de rattachement, et d'un authentifiant (R1) dudit abonné formé d'une première valeur numérique calculée à partir d'un identifiant (IDx) du fournisseur de service dans le réseau de l'opérateur, dudit identifiant (Device ID) de l'abonné dans son réseau de rattachement, et d'un élément secret (Sec.Op.) caractérisant l'abonné;
- d'autre part la fourniture par le fournisseur de service à destination de l'abonné de données (login, mdp) d'identification/authentification de l'abonné auprès dudit fournisseur.

Par ailleurs, selon l'invention, le processus de déroulement de chacune desdites sessions comprend une authentification de l'abonné par le fournisseur de service au moyen des étapes suivantes :
- une étape de calcul d'une deuxième valeur numérique (R2) à partir d'un identifiant (mdp) de l'abonné auprès du fournisseur de service et d'une donnée de diversification (Date) élaborée au niveau de l'abonné
- une étape de calcul d'une troisième valeur numérique (R3) à partir de ladite première valeur numérique (R1), de ladite seconde valeur numérique (R2) et d'une troisième donnée (Login) identifiant l'abonné auprès du fournisseur de service
- une étape de transmission depuis l'abonné vers le fournisseur de service d'une première trame de données constituée de ladite troisième valeur numérique (R3) et de données d'entrée, à savoir d'une donnée (Login) identifiant l'abonné auprès du fournisseur de service, et de ladite donnée de diversification (Date) élaborée au niveau de l'abonné
- une étape d'authentification de l'abonné par le fournisseur de service par le recalcul de validation de ladite troisième valeur numérique (R3) à partir desdites données d'entrée (Login, date) de ladite première trame de données, et de données (R1, mdp) déjà à disposition du fournisseur de service et associées audit abonné.

Selon une autre caractéristique avantageuse de l'invention, le procédé comprend également une authentification du fournisseur de service par l'abonné au moyen des étapes suivantes :
- une étape de calcul d'une quatrième valeur numérique (R4) à partir dudit authentifiant (R1) de l'abonné, d'une variable aléatoire (random) élaborée au niveau du fournisseur de service et d'une donnée de diversification (Date);
- une étape de transmission depuis le fournisseur de service vers l'abonné d'une seconde trame de données constituée de ladite quatrième valeur numérique (R4) et de ladite variable aléatoire (random);
- une étape d'authentification du fournisseur de service par l'abonné par le recalcul de validation de ladite quatrième valeur numérique (R4) à partir de ladite variable aléatoire (random) de ladite seconde trame de données, et de données (R1, Date) à disposition dudit abonné.

Ainsi, dès lors qu'il respecte toutes les caractéristiques énoncées ci-dessus, le procédé permet une authentification mutuelle de l'abonné et du fournisseur de services.

Lorsque l'authentification a été confirmée, préférentiellement de façon mutuelle, le procédé comprend en outre avantageusement :
- une phase d'élaboration d'une clé de session (Kses) commune audit d'abonné et audit fournisseur de service ; et,
- une phase de transmission de données chiffrées au moyen de ladite clé de session (Kses).

Dans ce cas, ladite phase d'élaboration d'une clé de session (Kses) comprend préférentiellement les étapes suivantes :
- une étape de calcul d'une clé de session (Kses) par le fournisseur de service à partir de données de calcul comprenant ladite seconde valeur numérique (R2) et une variable aléatoire (Random2);
- une étape de transmission à l'abonné de la seule variable aléatoire (Random2), sauf lorsque lesdites variables aléatoires Random et Random2 sont identiques, auquel cas ladite phase d'élaboration d'une clé de session (Kses) ne comprend aucune transmission de données du fournisseur de services à l'abonné, puisque cette dernière est déjà à disposition de l'abonné grâce à ladite seconde trame de données.;
- une étape de calcul par l'abonné de ladite clé de session à partir desdites données de calcul, à savoir de ladite variable aléatoire (Random2) transmise et de ladite seconde valeur numérique (R2) à disposition dudit abonné.

Dans les caractéristiques de l'invention exposées jusqu'à présent, le procédé comprend, à chaque session, les étapes successives et disjointes suivantes:
- authentification de l'abonné par le fournisseur de services;
- authentification du fournisseur de services par l'abonné;
- calcul d'une clé de session pour l'établissement d'un canal chiffré.

De cette façon on peut mettre en oeuvre sélectivement tout ou partie du procédé complet proposé.

Toutefois, dans une autre variante de réalisation, il est possible de combiner l'étape d'authentification du fournisseur de services par l'abonné avec l'étape de calcul de la clé de session pour l'établissement du canal chiffré. Selon cette variante, lesdites données de calcul de la clé de session (Kses) incluent également l'authentifiant de l'abonné (R1), ledit authentifiant (R1) étant à disposition tant dudit fournisseur de services que de l'abonné sans nécessité de sa transmission du premier au second. A ce moment, l'obtention correcte de ladite clé de session (Kses) calculée vaut authentification du fournisseur de service par l'abonné du fait de l'intelligibilité des données chiffrées reçues du fournisseur de service et déchiffrées au moyen de ladite clé de session (Kses) calculée par l'abonné.

Il n'est donc plus besoin de mettre en oeuvre les calculs et transferts d'information relatifs à la quatrième variable numérique R4.

Le calcul de la clé de session, que ce soit dans le mode de réalisation à étapes disjointes, ou dans celui combinant l'authentification retour et le calcul de la clé, peut présenter en outre lui-même une variante selon laquelle lesdites données de calcul de la clé de session (Kses) incluent également la donnée de diversification (Date), étant remarqué que cette donnée de diversification (Date) est à disposition tant dudit fournisseur de services que de l'abonné et qu'il n'est donc pas nécessaire de la retransmettre du premier au second.

Ainsi, selon l'invention, et quelles qu'en soient les variantes, le schéma d'authentification mêle deux couches de sécurisation, à savoir une identification/authentification (DeviceID, R1) au niveau du réseau à une identification au niveau applicatif (login, mdp). On s'appuie donc sur la sécurité intrinsèque que peut offrir un réseau de télécommunication, au niveau de l'application, lors de l'authentification des parties et/ou de l'établissement d'une communication chiffrée.

L'authentification mutuelle repose sur la diffusion d'une valeur R1 par l'opérateur, au moment de l'insciption de l'abonné auprès du fournisseur de services, à charge pour ce dernier d'assurer la protection de cette valeur qu'il conserve dans sa base de données d'authentification. L'abonné, quant à lui, ne conserve en principe pas cette valeur R1 (pour des raisons de sécurité), mais est en mesure de la recalculer automatiquement à chaque initialisation d'une nouvelle session. A ce moment, deux échanges sont nécessaires pour que les parties s'authentifient mutuellement, et établissent un canal sécurisé.

On notera que l'établissement d'un canal chiffré ne requiert qu'une information secrète, dont la génération est sous la responsabilité de l'opérateur de rattachement, information secrète détenue par l'abonné ou confinée dans son équipement connecté au réseau.

Selon une caractéristique avantageuse de l'invention, le fournisseur de service constitue une base de données associant à chaque abonné enregistré au moins une des données suivantes :
- un identifiant (DeviceID) de l'abonné dans son réseau de rattachement;
- des données d'identification/authentification de l'abonné auprès du fournisseur de service (Login, mdp);
- la valeur numérique R1 reçue de l'opérateur au moment du processus d'inscription initiale ;
- le cas échéant, au moins certaines des valeurs Date, R3, R4, Random, Random2 et Kses spécifiques de la session de communication courante.

Selon une autre caractéristique de l'invention, au moins certaines desdites première, seconde et troisième (et le cas échéant quatrième) valeurs numériques R1, R2, R3, R4 et la clé de session Kses sont calculées au moyen d'un algorithme cryptographique f1, f2, f3, f4, fk. Ledit algorithme cryptographique appartient préférentiellement au groupe comprenant :
- les algorithmes à fonction de hachage à sens unique avec clé, tels que DES en mode MAC ;
- les algorithmes à fonction de hachage à sens unique sans clé, tels que md5 (marque déposée), RIPEM et SHA;
- les algorithmes à mélange de bits.

Avantageusement, ladite première valeur numérique R1 est calculée au moyen d'un algorithme f1 de type A3/A8.

Selon une autre caractéristique préférentielle de l'invention, ledit élément secret (Sec. Op.) caractérisant l'abonné appartient au groupe comprenant la clé Ki contenue dans la carte SIM du mobile de l'abonné (lorsqu'on est en présence d'un réseau de type GSM) et une clé Kkm quelconque disponible dans le terminal de l'abonné.

De même, dans le cas où le réseau de rattachement de l'abonné est le réseau GSM, l'identifiant (Device ID) de l'abonné dans son réseau de rattachement appartient avantageusement au groupe comprenant l'IMSI ("International Mobile Subscriber Identity") et l'MSISDN ("Mobile Station ISDN Nr").

Préférentiellement, lesdites données (login, mdp) d'identification/authentification de l'abonné auprès dudit fournisseur sont constituées par :
- un identifiant (login) de l'abonné dans le réseau du fournisseur de service,
- un élément secret (mdp) fourni à l'abonné par le fournisseur de service.

Avantageusement, ladite donnée de diversification (Date) utilisée pour le calcul d'une deuxième valeur numérique (R2) appartient au groupe comprenant la date et/ou l'heure de la session, un nombre incrémenté à chaque nouvelle session demandée par l'abonné et un nombre aléatoire généré au niveau de l'abonné.

Avantageusement, le fournisseur de service peut s'assurer de la qualité de la donnée de diversification (Date) de l'abonné, en s'assurant qu'elle évolue effectivement dans le temps. Il peut par exemple effectuer cette vérification en conservant la valeur (Date) de la dernière tentative de connexion, pour constater si cette dernière est bien différente de la valeur (Date) courante.

Il est également possible de simplifier l'utilisation de la deuxième valeur numérique R2, en la réduisant simplement à la valeur de l'élément secret (mdp) fourni à l'abonné par le fournisseur de services. Dans ce cas, cette valeur n'est plus "dynamique" (c'est à dire variable en fonction des occurrences), mais figée. La fonction cryptographique f2 n'est alors bien entendu pas utilisée.

D'autres caractéristiques et avantages de l'invention apparaîtront à la lecture de la description suivante d'un mode de réalisation illustratif et non limitatif de l'invention. et des dessins annexés dans lesquels:
- la figure 1 schématise un exemple de configuration de réseaux de communication au sein de laquelle peut être mise en oeuvre l'invention;
- la figure 2 illustre schématiquement les phases successives de la variante du procédé de sécurisation selon l'invention, dans laquelle l'authentification retour est combinée au calcul de la clé de session;
- la figure 3 représente les étapes principales de calcul des valeurs numériques utilisées dans le cadre du procédé de transfert de données sécurisé selon l'invention.

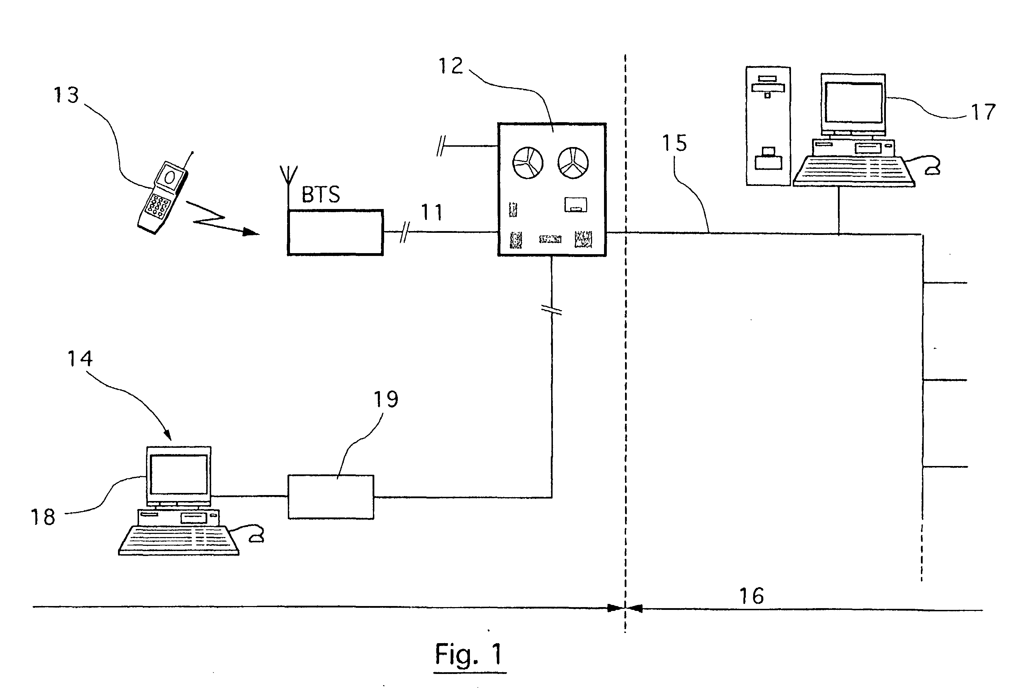

La configuration de la figure 1 est constituée d'un premier réseau de communication 11, géré par un opérateur 12, et comportant un abonné 13. Pour illustrer plus précisément cette configuration, on peut considérer que le réseau 11 est un réseau fermé à abonnement, du type d'un réseau GSM. L'abonné 13 est muni d'un téléphone mobile, typiquement un terminal portable muni d'une carte "SIM", communiquant avec le réseau 11 via une station de base (BTS). Le même opérateur 12 assure aussi par exemple la gestion d'un intranet, sur lequel est connecté un second abonné 14. Cet abonné 14 communique au moyen d'un ordinateur 18, connecté au réseau via un modem 19.

Sur demande d'un abonné, l'opérateur 12 est en mesure de réaliser une interconnexion 15 vers un second réseau 16, qui comprend lui-même un certain nombre d'utilisateurs, dont un fournisseur de services en ligne 17.

Le réseau 16, quant à lui, est par exemple un réseau ouvert du type internet, utilisant le protocole de communication IP. Le fournisseur de services en ligne 17 est un service de contenu accessible moyennant un processus préalable d'inscription auprès du service. Il s'agit par exemple d'un site bancaire, mis à la disposition de ses clients par une banque, et qui leur permet de consulter leurs comptes et/ou d'effectuer des transactions à distance. Ces opérations ont une nature confidentielle qui requiert d'une part que les interlocuteurs (le client abonné d'une part et la banque d'autre part) authentifient mutuellement leur identité afin d'éviter toute fraude, et d'autre part que les échanges d'information s'effectuent de façon chiffrée pour faire échec aux ruptures de confidentialité.

Chaque connexion d'un abonné client au fournisseur de service en ligne initie une session de communication dont l'établissement et le déroulement suivent le procédé de transfert de données par canal sécurisé selon l'invention.

Selon l'invention, l'établissement d'un canal sécurisé nécessite que l'abonné soit préalablement inscrit auprès du fournisseur de services, et que l'opérateur ait transmis au fournisseur de services des données servant à l'identification et l'authentification abonné/fournisseur, utilisées lors de l'établissement ultérieur de sessions de communication. En revanche, l'établissement et l'utilisation du canal sécurisé se passent sans intervention de l'opérateur du réseau de l'abonné, si ce n'est bien entendu au niveau du transport de la communication brute, celle-ci restant indéchiffrée et indéchiffrable par l'opérateur puisque les élements secrets ne sont connus que de l'abonné et du fournisseur de services. L'opérateur se contente de définir le schéma de sécurisation, c'est à dire de permettre la mise en oeuvre de l'invention. L'opérateur garantit la qualité de ce schéma pour les services d'authentification et de confidentialité. En revanche, bien entendu, le fournisseur de service reste responsable de la continuité de la chaine de sécurisation à son propre niveau.

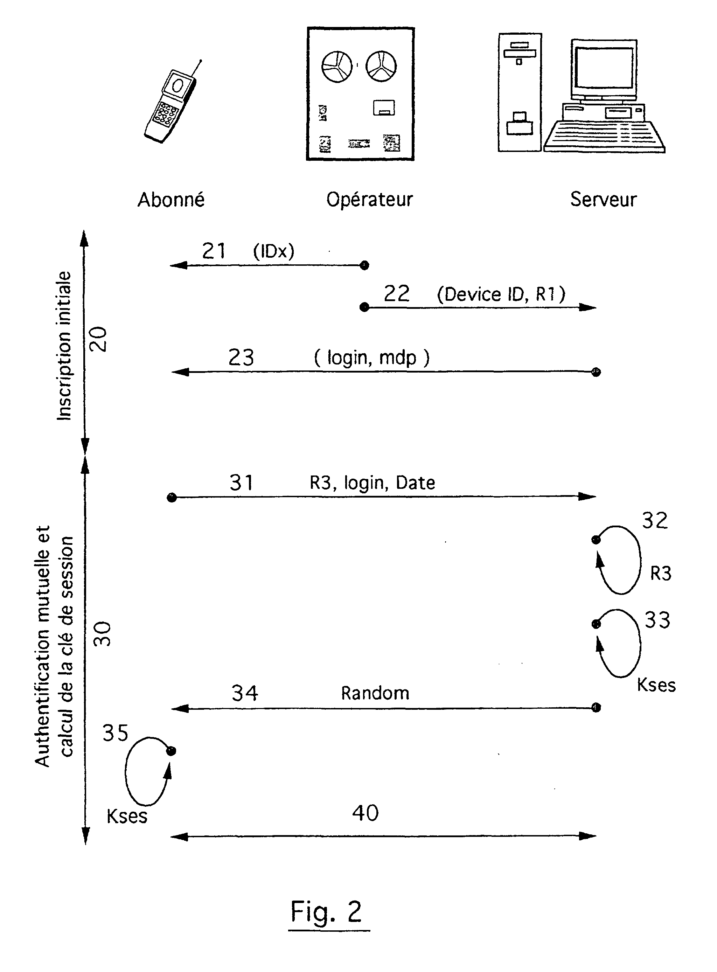

Dans le schéma de la figure 2 apparaissent successivement les deux processus consécutifs de mise en oeuvre du procédé de l'invention, à savoir :
- un premier processus 20 de souscription initiale dudit abonné audit fournisseur de service via ledit opérateur,
- un second processus 30 de déroulement de chacune des sessions de communication entre l'abonné et le fournisseur de service.

Lors du premier processus 20 d'inscription (ou souscription), on retrouve essentiellement les échanges de données suivants.

Dans un premier temps, l'opérateur de télécommunication va adresser (21) à l'abonné un identifiant du fournisseur de service (IDx), auprès duquel l'abonné souhaite s'inscrire. L'identifiant IDx est unique pour chaque fournisseur de services accessible à partir du réseau de l'opérateur selon le schéma de sécurisation de l'invention. Lorsque le fournisseur de services est accessible sur un réseau de type internet, l'identifiant IDx peut par exemple être une URL (en anglais "Uniform Resource Locator").

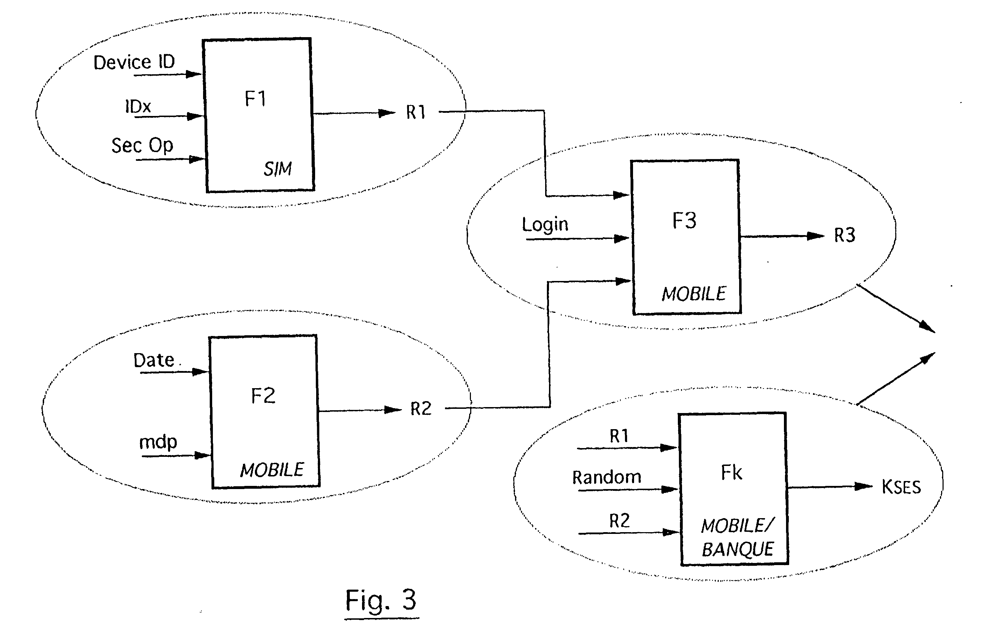

L'opérateur va par ailleurs acheminer (22) vers le fournisseur de service considéré un jeu de deux données, à savoir :
. un identifiant (Device ID) de l'abonné dans son réseau de rattachement, et
. un authentifiant (R1) dudit abonné, qui est avantageusement calculé dans des conditions détaillées en relation avec la description ci-après de la figure 3.

L'authentifiant R1 est calculé à partir d'un ensemble de valeurs, uniques, dans le réseau de l'opérateur, et est donc spécifique de la liaison entre l'abonné spécifique et le fournisseur de services spécifique considérés, et à ce titre devra être protégé par le fournisseur de services. Cette valeur R1 sera donc différente, pour un abonné donné, suivant le fournisseur de service. L'authentifiant R1 sera stocké en permanence dans la base d'authentification du fournisseur de services.

En retour, le fournisseur de service va fournir (23) à l'abonné également deux données d'identification de l'abonné auprès dudit fournisseur, à savoir:
. un identifiant (login) de l'abonné dans le réseau du fournisseur de service, et
. un élément secret (mdp), sous forme par exemple d'un mot de passe.

Tout ou partie des données échangées à ce stade peuvent transiter avantageusement hors ligne de communication (en anglais "off-line") suivant des procédures propres à chacun des intervenants (par exemple par télécopie, ou courrier ou tout autre moyen). Mais il peut aussi être plus simple dans certains cas de les transmettre en ligne.

Dans le second processus 30 de déroulement de chacune des sessions de communication entre l'abonné et le fournisseur de service, on peut distinguer plusieurs phases successives.

Tout d'abord, l'abonné va s'authentifier auprès du fournisseur de service en lui adressant (31) une trame de données constituée d'une valeur numérique (R3) et d'un jeu de deux données d'entrée, à savoir la donnée (Login) qui identifie l'abonné auprès du fournisseur de service, et une donnée de diversification (Date) élaborée au niveau de l'abonné.

Cet envoi de trame fait suite immédiatement à la saisie par l'abonné, par exemple sur la clavier de son terminal de télécommunication, du couple de valeur (login,mdp) l'identifiant et l'authentifiant auprès du fournisseur de services. La valeur login est intégrée directement dans la trame précitée envoyée au fournisseur de services, alors que la valeur mdp n'est pas transmise, mais est utilisée dans le calcul de la valeur numérique R3.

Les modalités de calcul de la valeur numérique R3 sont détaillées en relation avec la description de la figure 3 ci-après.

La donnée de diversification peut être toute donnée assurant la variabilité et interdisant le rejeu des données fournies à l'itération précédente par l'abonné. L'objectif est bien entendu de faire échec à des tentatives d'intrusion dites de "rejeu" (en anglais "replay attack"), dans lesquelles un intervenant tiers essaierait de se faire passer pour l'abonné. La donnée de diversification est avantageusement constituée de la date et/ou de l'heure de la session, mais peut tout aussi bien être un nombre incrémenté par l'abonné à chaque nouvelle session, ou encore un nombre aléatoire ou pseudo-aléatoire généré au niveau de l'abonné.

A réception de la trame envoyée à l'étape 31, le fournisseur de services va authentifier (32) l'abonné en recalculant, pour validation, ladite troisième valeur numérique (R3) à partir desdites données d'entrée (login, date) de ladite trame de données, et de données d'authentification (R1, mdp) déjà connues du fournisseur de services et associées audit abonné. L'obtention par le fournisseur de services, lors de ce recalcul de validation, d'une valeur identique à celle de R3 reçue de l'abonné, valide et authentifie l'abonné.

L'étape suivante 33 consiste, pour le fournisseur de services, à élaborer une clé de session (Kses) à partir d'un certain nombre de données (voir ci-après), y inclus une variable aléatoire (Random). A ce moment, le fournisseur de services va se limiter à transmettre (34) à l'abonné la seule variable aléatoire (Random), qui va servir à l'abonné pour recalculer (35) de son côté la même clé de session (Kses). Ce calcul, s'il est exact, permet alors à l'abonné d'authentifier le fournisseur de service, du fait de l'intelligibilité des données chiffrées reçues du fournisseur de service et déchiffrées au moyen de ladite clé de session (Kses) calculée par l'abonné.

L'abonné et le fournisseur de services peuvent alors communiquer (40) de façon sécurisée dans le canal chiffré établi.

Ce mode de réalisation illustré en figure ne constitue que l'une des variantes de l'invention, à savoir celle dans laquelle authentification en retour (c'est-à-dire authentification du fournisseur de services par l'abonné) et calcul de la clé de session sont combinées. L'homme de l'art concevra aisément les autres variantes à partir de cet exemple illustratif.

La figure 3 représente les principales étapes de calcul des valeurs numériques effectuées au cours des processus d'inscription initiale d'un abonné, puis d'authentification et de chiffrement des communications établies entre l'abonné et le fournisseur de service.

La première valeur numérique R1 est calculée à l'aide d'un algorithme de chiffrement f1, par exemple de type A3/A8, MD5 ou DES, en utilisant préférentiellement les valeurs d'entrée suivantes :
- la valeur "IDx" identifiant le fournisseur de service dans le réseau de rattachement de l'abonné. Cet identifiant est par exemple défini par l'opérateur du réseau, qui référence ainsi par différentes valeurs différents fournisseurs de services accessibles par l'abonné. Comme déjà mentionné, chaque fournisseur de service "x" est identifié par une valeur "IDx" différente.
- la valeur "Device ID" identifiant l'abonné dans son réseau de rattachement, constituée par exemple par le nom de l'abonné, ou tout autre identifiant de l'abonné attribué par l'opérateur. L'identifiant (Device ID) de l'abonné peut aussi par exemple être constitué par son IMSI ("International Mobile Subscriber Identity") ou encore son numéro MSISDN ("Mobile Station ISDN Number").
- un élément secret (Sec Opé) authentifiant l'abonné dans le réseau de l'opérateur. Cet élément secret peut par exemple être un mot de passe, un code de type PIN (en anglais "Personal Identity Code"), ou une clé confinée au niveau de l'équipement réseau. Dans le cas d'un réseau GSM, l'élément secret en question est avantageusement la clé Ki confinée dans la carte SIM. Mais tout autre élément secret peut être accepté comme valeur d'entrée servant à calculer R1, comme par exemple une clé spécifique Kkm, dédiée à l'authentification des abonnés GSM auprès de l'ensemble des serveurs de contenu. Dans le cas où le terminal de l'abonné est un ordinateur (de type PC (ordinateur personnel) ou autre), on peut également utiliser une clé "hardware" (terme anglais pour "matériel").

La valeur R1 est calculée selon la formule R1 = f1(DeviceID, IDx, Sec. Ope). L'algorithme cryptographique A3A8 est particulièrement adapté dans la mesure où, selon la mise en oeuvre des normes GSM, il est déjà présent dans la carte SIM. Dans ce cas R1 = f1(DeviceID, IDx, Ki), et est avantageusement exprimé sur douze octets avec f1 = A3A8. Il présente donc l'avantage de minimiser les développements, d'être secret pour les tiers, et de correspondre à un niveau de sécurité cohérent avec le réseau de rattachement. Tout autre algorithme déjà présent sur la carte SIM, comme l'est généralement l'algorithme DES, est également avantageux. D'autres algorithmes cryptographiques sont également envisageables.

L'équipement de l'abonné, qui dans le cas d'un réseau GSM est le terminal GSM muni de sa carte SIM et d'un logiciel de navigation approprié, est capable de calculer automatiquement la valeur R1 lorsque l'abonné choisit d'accéder à un fournisseur de services spécifique, après bien entendu que l'abonné s'est authentifié auprès de son opérateur de réseau.

La seconde valeur numérique R2 est calculée selon la formule R2 = f2(date, mdp), dans laquelle :
- l'agorithme f2 est tout algorithme cryptographique adéquat. De préférence, il s'agit d'un algorithme effectuant un calcul de sceau par l'intermédiaire d'une fonction de hachage à sens unique. Typiquement, il peut s'agir d'un algorithme à clé, tels que DES en mode MAC, ou encore d'un algorithme sans clé, tel que md5 (marque déposée pour un algorithme de compression commercialisé par la société RSA Inc.), RIPEM ou SHA. Ces algorithmes ne sont pas limitatifs de l'invention.
Ainsi, il est aussi possible d'utiliser un algorithme à mélange de bits, mais cette possibilité représente néanmoins une solution faible au sens cryptographique.
- la valeur (date) est la donnée de diversification discutée plus haut;
- la valeur mdp est l'élément secret adressé à l'étape 23 à l'abonné par le fournisseur de services, mais que le fournisseur de services a conservé également dans sa base d'authentification.

Cette valeur R2 n'est pas transmise en tant que telle au fournisseur de services. Il s'agit d'une variable intermédiaire, qui est utilisée pour le calcul de la valeur numérique R3. Cette valeur R2 peut d'ailleurs sans inconvénient être stockée en mémoire au niveau de l'équipement terminal de l'abonné, si celui-ci en est pourvu (par exemple dans un cache mémoire). Le fait de conserver la valeur R2 n'altère en rien, en effet, la sécurité du processus.

La troisième valeur numérique R3 est calculée selon la formule R3 = f3(R1, R2, login), dans laquelle:
- la valeur numérique R1 est l'authentifiant dudit abonné calculé comme détaillé ci-dessus, et adressée au fournisseur de services lors du processus de souscription ;
- les modalités de calcul de la valeur numérique R2 ont également été précisées cidessus ;
- la valeur login est l'identifiant de l'abonné dans le réseau du fournisseur de service, et retransmise par l'abonné au fournisseur de services au sein de la trame de données acheminée à l'étape 31 de la figure 2;
- l'algorithme f3 est avantageusement identique à celui choisi pour f2. En tout état de cause, il peut être choisi parmi les mêmes possibilités évoquées pour f2.

La clé de session Kses peut s'exprimer sous la forme Kses = fk(R1. R2, Random), dans laquelle :
- l'algorithme fk est avantageusement identique à celui choisi pour f2 et f3. En tout état de cause, il peut être choisi parmi les mêmes possibilités évoquées pour f2 ;
- les valeurs numériques R1 et R2 sont celles déjà mentionnées;
- la valeur aléatoire ou pseudo-aléatoire Random choisie par le fournisseur de
services.

## Revendications

1. Procédé de sécurisation d'une communication entre d'une part un abonné à un réseau de télécommunication et d'autre part un fournisseur de services accessible via un opérateur dudit réseau de télécommunication auquel est rattaché l'abonné,
**caractérisé en ce qu'**il comprend d'une part un processus d'inscription initiale dudit abonné audit fournisseur de service via ledit opérateur, et d'autre part un processus de déroulement de chacune des sessions de communication entre l'abonné et le fournisseur de service,
**en ce que** le processus d'inscription initiale comprend :
- d'une part la fourniture par l'opérateur de télécommunication à destination du fournisseur de service,
. d'un identifiant (Device ID) de l'abonné dans son réseau de rattachement, et
. d'un authentifiant (R1) dudit abonné formé d'une première valeur numérique calculée à partir d'un identifiant (IDx) du fournisseur de service dans le réseau de l'opérateur, dudit identifiant (Device ID) de l'abonné dans son réseau de rattachement, et d'un élément secret (Sec.Op.) caractérisant l'abonné;
- d'autre part la fourniture par le fournisseur de service à destination de l'abonné de données (login, mdp) d'identification/authentification de l'abonné auprès dudit fournisseur ;
et **en ce que** le processus de déroulement de chacune desdites sessions comprend une authentification de l'abonné par le fournisseur de service au moyen des étapes suivantes
- une étape de calcul d'une deuxième valeur numérique (R2) à partir d'un identifiant (mdp) de l'abonné auprès du fournisseur de service et d'une donnée de diversification (Date) élaborée au niveau de l'abonné
- une étape de calcul d'une troisième valeur numérique (R3) à partir de ladite première valeur numérique (R1), de ladite seconde valeur numérique (R2) et d'une troisième donnée (Login) identifiant l'abonné auprès du fournisseur de service
- une étape de transmission depuis l'abonné vers le fournisseur de service d'une première trame de données constituée de ladite troisième valeur numérique (R3) et de données d'entrée, à savoir d'une donnée (Login) identifiant l'abonné auprès du fournisseur de service, et de ladite donnée de diversification (Date) élaborée au niveau de l'abonné
- une étape d'authentification de l'abonné par le fournisseur de service par le recalcul de validation de ladite troisième valeur numérique (R3) à partir desdites données d'entrée (Login, date) de ladite première trame de données, et de données (R1, mdp) déjà à disposition du fournisseur de service et associées audit abonné.

2. Procédé selon la revendication 1 **caractérisé en ce qu'**il comprend également une authentification du fournisseur de service par l'abonné au moyen des étapes suivantes :
- une étape de calcul d'une quatrième valeur numérique (R4) à partir dudit authentifiant (R1) de l'abonné, d'une variable aléatoire (random) élaborée au niveau du fournisseur de service et d'une donnée de diversification (Date) ;
- une étape de transmission depuis le fournisseur de service vers l'abonné d'une seconde trame de données constituée de ladite quatrième valeur numérique (R4) et de ladite variable aléatoire (random);
- une étape d'authentification du fournisseur de service par l'abonné par le recalcul de validation de ladite quatrième valeur numérique (R4) à partir de ladite variable aléatoire (random) de ladite seconde trame de données, et de données (R1, Date) à disposition dudit abonné.

3. Procédé selon l'une quelconque des revendications 1 et 2 **caractérisé en ce qu'**il comprend en outre :
- une phase d'élaboration d'une clé de session (Kses) commune audit d'abonné et audit fournisseur de service : et,
- une phase de transmission de données chiffrées au moyen de ladite clé de session (Kses) ;
et **en ce que** ladite phase d'élaboration d'une clé de session (Kses) comprend les étapes suivantes :
- une étape de calcul d'une clé de session (Kses) par le fournisseur de service à partir de données de calcul comprenant ladite seconde valeur numérique (R2) et une variable aléatoire (Random2) ;
- une étape de transmission à l'abonné de la seule variable aléatoire (Random2);
- une étape de calcul par l'abonné de ladite clé de session à partir desdites données de calcul, à savoir de ladite variable aléatoire (Random2) transmise et de ladite seconde valeur numérique (R2) à disposition dudit abonné.

4. Procédé selon les revendications 2 et 3, **caractérisé en ce que** lesdites variables aléatoires Random et Random2 sont identiques, et **en ce que** ladite phase d'élaboration d'une clé de session (Kses) ne comprend aucune transmission de données du fournisseur de services à l'abonné, ladite variable aléatoire étant déjà à disposition de l'abonné grâce à ladite seconde trame de données.

5. Procédé selon la revendication 3, sans mise en oeuvre de la revendication 2, **caractérisé en ce que** lesdites données de calcul de la clé de session (Kses) incluent également l'authentifiant de l'abonné (R1), ledit authentifiant (R1) étant à disposition tant dudit fournisseur de services que de l'abonné sans nécessité de sa transmission du premier au second,
et **en ce que** l'obtention correcte de ladite clé de session (Kses) calculée vaut authentification du fournisseur de service par l'abonné du fait de l'intelligibilité des données chiffrées reçues du fournisseur de service et déchiffrées au moyen de ladite clé de session (Kses) calculée par l'abonné.

6. Procédé selon l'une quelconque des revendications 1 à 5 **caractérisé en ce que** lesdites données de calcul de la clé de session (Kses) incluent également la donnée de diversification (Date), ladite donnée de diversification (Date) étant à disposition tant dudit fournisseur de services que de l'abonné sans nécessité de sa transmission du premier au second.

7. Procédé selon l'une quelconque des revendications 1 à 6, **caractérisé en ce que** le fournisseur de service constitue une base de données associant à chaque abonné enregistré :
- un identifiant (DeviceID) de l'abonné dans son réseau de rattachement;
- des données d'identification/authentification de l'abonné auprès du fournisseur de service (Login, mdp);
- la valeur numérique R1 reçue de l'opérateur au moment du processus d'inscription initiale;
- le cas échéant, au moins certaines des valeurs Date, R3, Random, Random2 et Kses spécifiques de la session de communication courante.

8. Procédé selon l'une quelconque des revendications 1 à 7, **caractérisé en ce qu'**au moins certaines desdites première, seconde, troisième et quatrième valeurs numériques R1, R2, R3, R4, ainsi que la clé de session Kses sont calculées au moyen d'un algorithme cryptographique f1, f2, f3, fk.

9. Procédé selon la revendication 8, **caractérisé en ce que** ladite première valeur numérique R1 est calculée au moyen d'un algorithme f1 de type A3/A8.

10. Procédé selon la revendication 8, **caractérisé en ce que** ledit algorithme cryptographique appartient au groupe comprenant:
- les algorithmes à fonction de hachage à sens unique avec clé, tels que DES en mode MAC ;
- les algorithmes à fonction de hachage à sens unique sans clé, tels que md5 (marque déposée), RIPEM et SHA ;
- les algorithmes à mélange de bits.

11. Procédé selon l'une quelconque des revendications 1 à 10, **caractérisé en ce que** ledit élément secret (Sec. Op.) caractérisant l'abonné appartient au groupe comprenant la clé Ki contenue dans la carte SIM du mobile de l'abonné et une clé Kkm quelconque disponible dans le terminal de l'abonné

12. Procédé selon l'une quelconque des revendications 1 à 11, **caractérisé en ce que** dans le cas où le réseau de ratachement de l'abonné est le réseau GSM, l'identifiant (Device ID) de l'abonné dans son réseau de rattachement appartient au groupe comprenant l'IMSI ("International Mobile Subscriber Identity") et l'MSISDN ("Mobile Station ISDN Nr").

13. Procédé selon l'une quelconque des revendications 1 à 12, **caractérisé en ce que** lesdites données (login, mdp) d'identification/authentification de l'abonné auprès dudit fournisseur sont constituées par :
- un identifiant (login) de l'abonné dans le réseau du fournisseur de service,
- un élément secret (mdp) fourni à l'abonné par le fournisseur de service.

14. Procédé selon l'une quelconque des revendications 1 à 13, **caractérisé en ce que** ladite donnée de diversification (Date) utilisée pour le calcul d'une deuxième valeur numérique (R2) appartient au groupe comprenant la date et/ou l'heure de la session, un nombre incrémenté à chaque nouvelle session demandée par l'abonné et un nombre aléatoire généré au niveau de l'abonné.

15. Procédé selon l'une quelconque des revendications 1 à 14, **caractérisé en ce que** ladite première valeur numérique (R1) formant authentifiant de l'abonné est élaborée lors de chaque session, et n'est pas conservée par l'abonné.

16. Procédé selon l'une quelconque des revendications 1 à 15, **caractérisé en ce que** au moins certaines des données (Device ID, R1 ; login, mdp) échangées lors de la phase de souscription initiale de l'abonné auprès du fournisseur de service sont transmises selon un moyen comprenant les transmissions en ligne et les transmissions hors ligne.

17. Procédé selon l'une quelconque des revendications 1 à 16 **caractérisé en ce que** ladite seconde valeur numérique (R2) est simplement égale audit élément secret (mdp) fourni à l'abonné par le fournisseur de service.

## Claims

1. Process for ensuring the security of a communication between, firstly, a subscriber to a telecommunications network and, secondly, a service provider accessible via an operator of the said telecommunications network to which the said subscriber is assigned,
**characterized in that** it comprises, firstly, a process for initial registration of the said subscriber with the said service provider via the said operator, and, secondly, a process for the execution of each of the communication sessions between the subscriber and the service provider,
the initial registration process comprises:
- firstly, the telecommunications operator provides the service provider with
. an identifier (Device ID) for the subscriber in the network to which the latter is assigned, and
. an authenticator (R1) for the said subscriber, composed of a first numeric value calculated from an identifier (IDx) for the service provider in the operator's network, the said identifier (Device ID) for the subscriber in the network to which the latter is assigned, and a secret element (Sec. Op.) characterizing the subscriber;
- secondly, the service provider provides the subscriber with data for identification/authentication (Login, mdp) of the subscriber with the service provider;
and the process for the execution of each of the said sessions comprises authentication of the subscriber by the service provider by means of the following steps:
- a step in which a second numeric value (R2) is calculated from an identifier (mdp) for the subscriber with the service provider and a diversification data element (Date) generated at the subscriber
- a step in which a third numeric value (R3) is calculated from the said first numeric value (R1), the said second numeric value (R2) and a third data element (Login) identifying the subscriber with the service provider,
- a step in which a first data frame, composed of the said third numeric value (R3) and input data, namely a data element (Login) identifying the subscriber with the service provider, and of the said diversification data element (Date) generated at the subscriber, is transmitted from the subscriber to the service provider,
- a step in which the service provider authenticates the subscriber by recalculating, as a validation, the said third numeric value (R3) from the input data (Login, Date) of the said first data frame, and data (R1, mdp) already available to the service provider and associated with the said subscriber.

2. Process according to claim 1, **characterized in that** it also comprises authentication of the service provider by the subscriber by means of the following steps:
- a step in which a fourth numeric value (R4) is calculated from the said subscriber authenticator (R1), a random variable (Random), generated at the service provider, and a diversification data element (Date);
- a step in which a second data frame, composed of the said fourth numeric value (R4) and the said random variable (Random), is transmitted from the service provider to the subscriber;
- a step in which the subscriber authenticates the service provider by recalculating, as a validation, the said fourth numeric value (R4) from the said random variable (Random) of the said second data frame, and data (R1, Date) available to the said subscriber.

3. Process according to either of claims 1 or 2, **characterized in that** it additionally comprises:
- a phase in which a session key (Kses) common to the said subscriber and the said service provider is generated: and,
- a phase in which encrypted data are transmitted by means of the said session key (Kses);
and the phase in which a session key (Kses) is generated comprises the following steps:
- a step in which the service provider calculates a session key (Kses) from calculation data comprising the said second numeric value (R2) and a random variable (Random2);
- a step in which the single random variable (Random2) is transmitted to the subscriber;
- a step in which the subscriber calculates the said session key from the said calculation data, namely, from the said transmitted random variable (Random2) and the said second numeric value (R2) available to the said subscriber.

4. Process according to claims 2 and 3, **characterized in that** the said random variables Random and Random 2 are identical, and the said phase for generation of a session key (Kses) does not comprise any data transmission from the service provider to the subscriber, the said random variable already being available to the subscriber by means of the said second data frame.

5. Process according to claim 3, without implementation of claim 2, **characterized in that** the said calculation data for the session key (Kses) also include the subscriber authenticator (R1), the said authenticator (R1) being available both to the said service provider and to the subscriber without the need for it to be transmitted from the former to the latter,
and, if the said calculated session key (Kses) is obtained correctly, the service provider is effectively authenticated by the subscriber due to the fact that the encrypted data received from the service provider and decrypted by means of the said session key (Kses) calculated by the subscriber are intelligible.

6. Process according to any one of claims 1 to 5, **characterized in that** the said calculation data for the session key (Kses) also include the diversification data element (Data), the said diversification data element (Date) being available both to the said service provider and to the subscriber without the need for it to be transmitted from the former to the latter.

7. Process according to any one of claims 1 to 6, **characterized in that** the service provider establishes a database associating with each registered subscriber:
- an identifier (Device ID) for the subscriber in the network to which the latter is assigned;
- data for identification/authentication (Login, mdp) of the subscriber with the service supplier;
- the numeric value R1 received from the operator at the time of the initial registration process;
- possibly, at least some of the values Date, R3, Random, Random2 and Kses specific to the current communication session.

8. Process according to any one of claims 1 to 7, **characterized in that** at least some of the said first, second, third and fourth numeric values R1, R2, R3, R4, and the session key Kses, are calculated by means of a cryptographic algorithm f1, f2, f3, fk.

9. Process according to claim 8, **characterized in that** the said first numeric value R1 is calculated by means of an A3/A8 type algorithm f1.

10. Process according to claim 8, **characterized in that** the said cryptographic algorithm belongs to the group containing:
- algorithms with a single-direction chopping function with a key, such as DES in MAC mode;
- algorithms with a single-direction chopping function without a key, such as md5 (registered trademark), RIPEM and SHA;
- algorithms with bit mixing.

11. Process according to any one of claims 1 to 10, **characterized in that** the said secret element (Sec. Op.) characterizing the subscriber belongs to the group containing the key Ki contained in the SIM card of the subscriber's mobile and an arbitrary key Kkm available in the subscriber's terminal.

12. Process according to any one of claims 1 to 11, **characterized in that** if the network to which the subscriber is assigned is the GSM network, the subscriber's identifier (Device ID) in the network to which the latter is assigned belongs to the group comprising the IMSI ("International Mobile Subscriber Identity") and the MSISDN ("Mobile Station ISDN number").

13. Process according to any one of claims 1 to 12, **characterized in that** the said data for identification/authentication (Login/mdp) of the subscriber with the said service provider are comprised of:
- a subscriber identifier (Login) in the network of the service provider,
- a secret element (mdp) supplied to the subscriber by the service provider.

14. Process according to any one of claims 1 to 13, **characterized in that** the said diversification data element (Date) used to calculate a second numeric value (R2) belongs to the group comprising the date and/or time of the session, a number incremented upon each new session requested by the subscriber, and a random number generated at the subscriber.

15. Process according to any one of claims 1 to 14, **characterized in that** the said first numeric value (R1) constituting the authenticator of the subscriber is generated during each session and is not kept by the subscriber.

16. Process according to any one of claims 1 to 15, **characterized in that** at least some of the data (Device ID, R1; Login, mdp) exchanged during the phase of initial registration of the subscriber with the service provider are transmitted using a means comprising on-line transmissions and off-line transmissions.

17. Process according to any one of claims 1 to 16, **characterized in that** the said second numeric value (R2) is simply equal to the said secret element (mdp) supplied to the subscriber by the service provider.

## Patentansprüche

1. Verfahren zum Sichern einer Verbindung zwischen einerseits einem Teilnehmer eines Telekommunikationsnetzes und andererseits einem über einen Betreiber dieses Telekommunikationsnetzes, an welches der Teilnehmer angebunden ist, erreichbaren Dienstleister,
**dadurch gekennzeichnet, dass** es einerseits eine anfängliche Eintragung dieses Teilnehmers bei dem Dienstleister über den Betreiber und andererseits einen Vorgang zur Abwicklung einer jeden Kommunikationssitzung zwischen dem Teilnehmer und dem Dienstleister umfasst,
wobei die anfängliche Eintragung folgendes umfasst:
- einerseits das Bereitstellen durch den Betreiber des Telekommunikationsnetzes an den Dienstleister:
. einer Kennung (Device ID) des Teilnehmers in seinem Anbindungsnetz und
. einer Authentifizierung (R1) des Teilnehmers, gebildet von einem ersten, auf der Grundlage einer Kennung (IDₓ) des Dienstleisters im Netzwerk des Betreibers berechneten numerischen Wertes, der Kennung (Device ID) des Teilnehmers in seinem Anschlussnetzwerk und einem geheimen Element (Sec.Op.), das den Teilnehmer charakterisiert;
- und andererseits das Bereitstellen durch den Dienstleister an den Teilnehmer von Kennungs-/Authentifizierungsdaten (Login, mdp) des Teilnehmers beim Dienstleister;
und dadurch, dass das Abwicklungsverfahren einer jeden Sitzung eine Authentifizierung des Teilnehmers durch den Dienstleister mit Hilfe der folgenden Schritte umfasst:
- einen Schritt zum Berechnen eines zweiten numerischen Wertes (R2) auf der Grundlage einer Kennung (mdp) des Teilnehmers beim Dienstleister und eines auf der Ebene des Teilnehmers erzeugten Diversifikationswertes (Date),
- einen Schritt zur Berechnung eines dritten numerischen Wertes (R3), ausgehend vom ersten numerischen Wert (R1), dem zweiten numerischen Wert (R2) sowie eines dritten Datenwertes (Login), der den Teilnehmer beim Dienstleister identifiziert,
- einen Schritt zum Senden eines ersten Datenblocks durch den Teilnehmer an den Dienstleister, wobei dieser Block vom dritten numerischen Wert (R3) und von den Eingangsdaten gebildet wird, nämlich einem Datenwert (Login), der den Teilnehmer beim Dienstleister identifiziert, und dem auf der Ebene des Teilnehmers erzeugten Diversifikationswert (Date),
- einen Schritt zum Authentifizieren des Teilnehmers durch den Dienstleister mittels der erneuten Validierungsberechnung des dritten numerischen Wertes (R3) auf der Grundlage der Eingangsdaten (Login, date) des ersten Datenblocks und von bereits dem Dienstleister zur Verfügung stehenden und mit dem Teilnehmer assoziierten Daten (R1, mdp).

2. Verfahren nach Anspruch 1, **dadurch gekennzeichnet, dass** es ebenfalls eine Authentifizierung des Dienstleisters durch den Teilnehmer mit Hilfe der folgenden Schritte umfasst:
- einen Schritt zur Berechnung eines vierten numerischen Wertes (R4), ausgehend von der Authentifizierung (R1) des Teilnehmers, einer aleatorischen (random) Variablen, die auf der Ebene des Dienstleisters erzeugt wird, und eines Diversifikationswertes (Date);
- einen Schritt zur Übertragung eines zweiten Datenblocks vom Dienstleister an den Teilnehmer, wobei dieses Raster aus dem vierten numerischen Wert (R4) und der aleatorischen Variablen (Random) gebildet wird;
- einen Schritt zur Authentifizierung des Dienstleisters durch den Teilnehmer durch erneute Berechnung der Vatidierung des vierten numerischen Wertes (R4), ausgehend von der aleatorischen Variablen (Random) des zweiten Datenblocks und von dem Teilnehmer zur Verfügung stehenden Daten (R1, Date).

3. Verfahren nach einem der Ansprüche 1 oder 2, **dadurch gekennzeichnet, dass** es ferner folgendes umfasst:
- eine Phase zur Erzeugung eines dem Teilnehmer und dem Dienstleister gemeinsamen Sitzungsschlüssels (Kses) und,
- eine Phase zur Übertragung von mit Hilfe des besagten Schlüssels (Kses) verschlüsselten Daten;
und, dass die Phase zur Erzeugung eines Sitzungsschlüssels (Kses) die folgenden Schritte umfasst:
- einen Schritt zur Berechnung eines Sitzungsschlüssels (Kses) durch den Dienstleister, ausgehend von Berechnungsdaten, die den zweiten numerischen Wert (R2) und eine aleatorische Variable (Random2) umfassen;
- einen Schritt zur Übertragung der alleinigen aleatorischen Variablen (Random2) an den Teilnehmer;
- einen Schritt zum Berechnen des Sitzungsschlüssels durch den Teilnehmer, ausgehend von den Berechnungsdaten, nämlich die übertragene aleatorische Variable (Random2) und den zweiten, dem Teilnehmer zur Verfügung stehenden numerischen Wert (R2).

4. Verfahren nach den Ansprüchen 2 und 3, **dadurch gekennzeichnet, dass** die aleatorischen Variablen Random und Random2 identisch sind und, dass die Phase zum Erzeugen eines Sitzungsschlüssels (Kses) keine Datenübertragung vom Dienstleister zum Teilnehmer umfasst, da die aleatorische Variable dem Teilnehmer, dank des zweiten Datenblocks, bereits zur Verfügung steht.

5. Verfahren nach Anspruch 3, ohne Einsatz von Anspruch 2, **dadurch gekennzeichnet, dass** die Daten zum Berechnen des Sitzungsschlüssels (Kses) ebenfalls die Authentifizierung des Teilnehmers (R1) umfassen, wobei diese Authentifizierung (R1) sowohl dem Dienstleister als auch dem Teilnehmer zur Verfügung steht, ohne Notwendigkeit der Übertragung vom ersten an den zweiten und,
dass der korrekte Empfang des berechneten Sitzungsschlüssels (Kses) als Authentifizierung des Dienstleisters durch den Teilnehmer gilt, aufgrund der Verständlichkeit der vom Dienstleister empfangenen verschlüsselten Daten, welche mit Hilfe des vom Teilnehmer berechneten Sitzungsschlüssels (Kses) entziffert werden.

6. Verfahren nach einem der Ansprüche 1 bis 5, **dadurch gekennzeichnet, dass** die Daten zum Berechnen des Sitzungsschlüssels (Kses) ebenfalls den Diversifikationswert (Date) enthalten, wobei dieser Diversifikationswert (Date) sowohl dem Dienstleister als auch dem Teilnehmer zur Verfügung steht, ohne Notwendigkeit der Übertragung vom ersten an den zweiten.

7. Verfahren nach einem der Ansprüche 1 bis 6, **dadurch gekennzeichnet, dass** der Dienstleister eine Datenbank erzeugt, die jedem eingetragenen Teilnehmer folgendes zuordnet:
- eine Kennung (Device ID) des Teilnehmers in seinem Anschlussnetzwerk;
- Kennungs-/Authentifizierungsdaten des Teilnehmers gegenüber dem Dienstleister (Login, mdp);
- den vom Betreiber zum Zeitpunkt der ersten Eintragung empfangenen numerischen Wert R1;
- gegebenenfalls mindestens einige der für die laufenden Kommunikationssitzung spezifischen Werte Date, R3, Random, Random2 und Kses.

8. Verfahren nach einem der Ansprüche 1 bis 7, **dadurch gekennzeichnet, dass** mindestens einige dieser ersten, zweiten, dritten und vierten numerischen Werte R1, R2, R3, R4 sowie der Sitzungsschlüssel Kses mit Hilfe eines kryptographischen Algorithmus f1, f2, f3, fk berechnet werden.

9. Verfahren nach Anspruch 8, **dadurch gekennzeichnet, dass** der erste numerische Wert R1 mit Hilfe eines Algorithmus f1 vom Typ A3/A8 berechnet wird.

10. Verfahren nach Anspruch 8, **dadurch gekennzeichnet, dass** der kryptographische Algorithmus der folgendes umfassenden Gruppe angehört:
- die Algorithmen mit Zerteilungsfunktion in eine einzige Richtung mit Schlüssel, wie beispielsweise DES im MAC-Modus;
- die Algorithmen mit Zerteilungsfunktion in eine einzige Richtung ohne Schlüssel, wie beispielsweise md5 (eingetragenes Warenzeichen), RIPEM und SHA;
- die Algorithmen mit Bitvermischung.

11. Verfahren nach einem der Ansprüche 1 bis 10, **dadurch gekennzeichnet, dass** das Geheimelement (Sec. Op.), welches den Teilnehmer kennzeichnet, der Gruppe angehört, die den in der SIM-Karte des Mobiltelefons bzw. mobilen Endgeräts des Teilnehmers enthaltenen Ki-Schlüssel und einen beliebigen, im Terminal des Teilnehmers verfügbaren Kkm-Schlüssel umfasst.

12. Verfahren nach einem der Ansprüche 1 bis 11, **dadurch gekennzeichnet, dass**, wenn das Anschlussnetzwerk des Teilnehmers das GSM-Netzwerk ist, die Kennung (Device ID) des Teilnehmers in seinem Anschlussnetzwerk der Gruppe angehört, die die IMSI ("International Mobile Subscriber Identity" (Internationale mobile Teilnehmeridentität)) und die MSISDN ("Mobile Station ISDN Nr" (ISDN-Nr. für mobile Stationen)) umfasst.

13. Verfahren nach einem der Ansprüche 1 bis 12, **dadurch gekennzeichnet, dass** die Identifizierungs-/Authentifizierungsdaten (login, mdp) des Teilnehmers gegenüber dem Dienstleister aus den folgenden Elementen gebildet sind:
- eine Kennung (login) des Teilnehmers im Netzwerk des Dienstleisters,
- ein vom Dienstleister dem Teilnehmer zur Verfügung gestelltes geheimes Element (mdp).

14. Verfahren nach einem der Ansprüche 1 bis 13, **dadurch gekennzeichnet, dass** der zum Berechnen eines zweiten numerischen Wertes (R2) benutzte Diversifikationswert (Date) der Gruppe angehört, welche das Datum und/oder die Uhrzeit der Sitzung, eine bei jeder neuen vom Teilnehmer angeforderten Sitzung inkrementierte Zahl und eine auf der Ebene des Teilnehmers erzeugte aleatorische Zahl umfasst.

15. Verfahren nach einem der Ansprüche 1 bis 14, **dadurch gekennzeichnet, dass** der erste, die Kennung des Teilnehmers bildende numerische Wert (R1), bei jeder Sitzung erzeugt wird und vom Teilnehmer nicht gespeichert wird.

16. Verfahren nach einem der Ansprüche 1 bis 15, **dadurch gekennzeichnet, dass** mindestens einige der Daten (Device ID, R1; Login, mdp), die bei der ersten Eintragung des Teilnehmers beim Dienstleister ausgetauscht werden, mit Hilfe von Mitteln übertragen werden, dis sowohl On-Line- als auch Off-Line-Übertragungen umfassen.

17. Verfahren nach einem der Ansprüche 1 bis 16, **dadurch gekennzeichnet, dass** der zweite numerische Wert (R2) einfach geich dem vom Dienstleister an den Teilnehmer bereitgestellten geheimen Element (mdp) ist.
